# EUROPÄISCHE PATENTSCHRIFT

(11) **EP 1 530 544 B1**
(45) Veröffentlichungstag und Bekanntmachung des Hinweises auf die Patenterteilung: **21.06.2006**
(21) Anmeldenummer: 03784028.7
(22) Anmeldetag: 18.07.2003
(51) Int. Cl.: B65G 1/137

(54) **SYSTEM ZUM KOMMISSIONIEREN VON ZENTRALBANDTAUGLICHEN UND NICHT-ZENTRALBANDTAUGLICHEN ARTIKELN**
SYSTEM FOR COMMISSIONING ARTICLES WHICH ARE SUITABLE FOR A CENTRAL BELT AND ARTICLES WHICH ARE NOT SUITABLE FOR A CENTRAL BELT
SYSTEME DE PREPARATION D'ARTICLES POUVANT ETRE RECUS OU NON PAR UNE BANDE CENTRALE

(30) Priorität: 06.08.2002 DE 10235900
(43) Veröffentlichungstag der Anmeldung: 18.05.2005
(73) Patentinhaber: Knapp Logistik Automation Gesellschaft MBH, 8075 Hart bei Graz (AT)
(72) Erfinder: FREUDELSPERGER, Karl, A-8075 Hart bei Graz (AT)
(74) Vertreter: Hanke, Hilmar
(86) Internationale Anmeldenummer: PCT/EP2003/007899
(87) Internationale Veröffentlichungsnummer: WO 2004/014766

(56) Entgegenhaltungen:
- EP-A- 0 471 150
- EP-A- 1 151 942
- WO-A-97/03903
- US-A- 5 271 703
- US-A- 5 832 693
- US-B1- 6 289 260

## Beschreibung

Die Erfindung betrifft ein Kommissioniersystem zum Kommissionieren von zentralbandtauglichen Artikeln in einer Zentralbandkommissioniervorrichtung und nicht zentralbandtauglichen Artikeln manuell aus einem Artikellager bzw. Regal, bei welchem zentralbandtaugliche Artikel zumeist manuell von einem Kommissionierer in Aufgabeschalen über einem Zentralband kommissioniert werden und dann automatisch aus den Aufgabeschalen gezielt direkt auf das angetriebene Zentralband und von dort am Ende des Zentralbandes in einen stationären Behälter oder gleich in einen auf dem angetriebenen Zentralband angeordneten Behälter fallen.

Bekannte Zentralbandkommissioniervorrichtungen, wie z. B. der sogenannte A-Rahmenautomat wie auch semimanuelle Kommissioniersysteme, bei welchen Artikel zunächst auf ein Zentralband und anschließend in einen Behälter geschüttet werden, haben im allgemeinen den Nachteil, daß nur Artikel kommissioniert werden können, die diese Behandlung ohne Schaden zu nehmen auch überstehen.

Artikel, die zu groß, zu schwer oder zu zerbrechlich für eine solche Handhabung sind, müssen nach wie vor entweder in einem sogenannten "Pick-to-Belt-System " zunächst auf ein Band gelegt oder automatisch ausgeschoben werden, von dem sie zu einer Packstation gebracht werden, an der sie dann manuell oder durch eine eigens dafür gebaute Maschine in einen Versandbehälter oder Karton gepackt werden, oder aber die Artikel werden direkt von einem Kommissionierregal in einen Versandbehälter oder Karton gelegt oder von einer eigens dafür gebaute Maschine gepackt.

In modernen Kommissionierlagern kann es vorkommen, daß in einem Artikelmix zu kommissionieren ist, der sich sowohl aus zentralbandtauglichen, d.h. aus relativ leichten und robusten, als auch aus nicht zentralbandtauglichen, d.h. aus relativ großen, schweren oder zerbrechlichen Artikeln zusammensetzt. Solche Artikelzusammensetzungen sind beispielsweise im Drogeriemarktbereich, im Lebensmittelsektor und im Elektronikgroßhandel anzutreffen.

Die bisherige Vorgehensweise in solchen Fällen besteht darin, diesen Artikelmix in zentralbandtaugliche Artikel, die einer Zentralbandkommissioniervorrichtung zugeführt werden, um dessen Vorteile in der Kommissionierung auszunutzen, und in nicht zentralbandtauglich Artikel zu trennen, die weiterhin manuell oder durch eine eigens dafür gebaute Maschine in Versandbehälter oder Kartons gepackt werden. Grundsätzlich erfolgt eine solche Trennung derart, daß räumlich unterschiedliche Lagerorte, die sich auch in ihren Kommissioniereinrichtungen unterscheiden, entweder durch eine Fördertechnik auf relativ langen Wegen miteinander verbunden oder überhaupt getrennt behandelt werden. Von Nachteil ist, daß mehrere Lagerbereiche unterschieden werden müssen, und eine entsprechende Aufteilung der Artikel erfolgen muß. Weiterhin besteht der Nachteil, daß bei Kommissionen, die aus beiden Bereichen Artikel, nämlich zentralbandtaugliche und nicht zentralbandtaugliche Artikel, benötigen, entweder ein weiter Weg zurückgelegt werden muß, und sich dadurch die Durchlaufzeiten der Aufträge verlängert, oder überhaupt zwei unterschiedliche Behälter für eine Kommission vorgesehen werden müssen.

Aufgabe der Erfindung ist die Schaffung eines Kommissioniersystems zum Kommissionieren sowohl von der zentralbandtauglichen als auch nicht zentralbandtauglichen Artikeln, welches sich durch seine Einfachheit und Effektivität auszeichnet.

Gelöst wird die der Erfindung zugrundeliegende Aufgabe durch ein Kommissioniersystem mit den Merkmalen des Anspruchs 1, vorteilhaft weitergebildet durch die Merkmale der Ansprüche 2 bis 6.

Ausgehend vom eingangs genannten gattungsgemäßen Kommissioniersystem kennzeichnet sich das erfindungsgemäße Kommissioniersystem für zentralbandtaugliche und nicht zentralbandtaugliche Artikel dadurch, daß das Zentralband in einer Regalgasse eines Doppelregals vorgesehen ist, welches zwei parallele voneinander beabstandete Regale besitzt, denen jeweils eine vorzugsweise bodennahe Förderstrecke zugeordnet ist, und die belden Förderstrecken vorzugsweise in Form einer freien Rollenbahn im Kommissionierbereich des Zentralbandes parallel zum Zentralband verlaufen und Behälter auf der Förderstrecke für eine manuelle Befüllung mit nicht zentralbandtauglichen Artikeln angeordnet sind, wobei die mit nicht zentralbandtauglichen Artikeln befüllten Behälter entweder direkt einer Versandstation oder für eine weitere Befüllung mit zentralbandtauglichen Artikeln direkt dem angetriebenen Zentralband oder einer Abzugsstrecke überführbar sind, welche die mit nicht zentralbandtauglichen Artikeln befüllten Behälter an das Ende des Zentralbandes für eine weitere Befüllung mit zentralbandtauglichen Artikeln fördert.

Hierbei kann die Förderstrecke im Regal integriert ausgebildet und zumindest teilweise baulicher Bestandteil des Regals sein.

Die Förderstrecke kann aber auch im Bereich des Zentralbandes angeordnet und zumindest teilweise baulicher Bestandteil des Zentralbandsystems sein.

Die Abzugsstrecke kann über dem Zentralband parallel zum Zentralband angeordnet sein oder alternativ unmittelbar neben der Förderstrecke in einer Parallelanordnung vorzugsweise in gleicher Höhe zur Förderstrecke liegen.

Förderstrecke(n), Abzugsstrecke(n) und/oder Zentralband können bevorzugt mit Ausschleusstationen versehen sein.

Gegenstand der Erfindung ist mithin eine Zentralbandkommissioniervorrichtung vornehmlich der eingangs erwähnten Art, bei welchem Artikel vorzugsweise zunächst meist manuell in Aufgabeschalen über einem Zentralband kommissioniert werden und dann automatisch aus diesen Aufgabeschalen auf das Zentralband fallen und von dort in einen Behälter gelangen, oder gleich in einen auf dem Zentralband angeordneten Behälter fallen, kombiniert mit konventioneller Kommissioniertechnik in Form von zumindest einer Förderstrecke, insbesondere einer freien Rollenbahn, oder einer Fördertechnik mit Kommissionierstationen bzw. Ausschleusstationen in mehreren Varianten.

Dabei können die Artikel entweder vollkommen gemischt im selben Gang verbleiben oder zumindest nur innerhalb desselben Kommissionierganges aufgeteilt werden, der ein System bildet. Dadurch können im erfindungsgemäßen gemischten Kommissioniersystem die Vorteile der Zentralbandkommissioniervorrichtung, nämlich die höhere Kommissionierleistung durch Automatisierung oder durch entfallenes Behälterhandling genutzt werden, ohne dessen Nachteile, nämlich keine Handhabungsmöglichkeit von nicht zentralbandtauglichen Artikeln, in Kauf nehmen zu müssen.

Die Erfindung wird nachfolgend anhand von Ausführungsbeispielen unter Bezugnahme auf die beigefügte Zeichnung näher erläutert; es zeigen:
- Figur 1: ein gemischtes Kommissioniersystem für zentralbandtaugliche und nicht zentralbandtaugliche Artikel in einer ersten Ausführungsvariante innerhalb eines Kommissionierganges, mit einem Zentralband und zwei voneinander beanstandeten Regalen in einer schematischen Querschnittsansicht,
- Figur 2: das gemischte Kommissioniersystem ähnlich Figur 1 in einer zweiten Ausführungsvariante,
- Figur 3: das gemischte Kommissioniersystem ähnlich den Figuren 1 und 2 in einer dritten Ausführungsvariante,
- Figur 4: das gemischte Kommissioniersystem ähnlich den Figuren 1, 2 und 3 in einer vierten Ausführungsvariante,
- Figur 5: das gemischte Kommissioniersystem ähnlich den Figuren 1 bis 4 in einer fünften und sechsten Ausführungsvariante,
- Figur 6: eine schematische Draufsicht auf das gemischte Kommissioniersystem nach Figur 5 in der sechsten Ausführungsvariante,
- Figur 7: eine schematische Seitenansicht eines gemischten Kommissioniersystems in einer siebten Ausführungsvariante, und
- Figur 8: eine schematische Draufsicht auf das Kommissioniersystem nach Figur 7 in der siebten Ausführungsvariante.

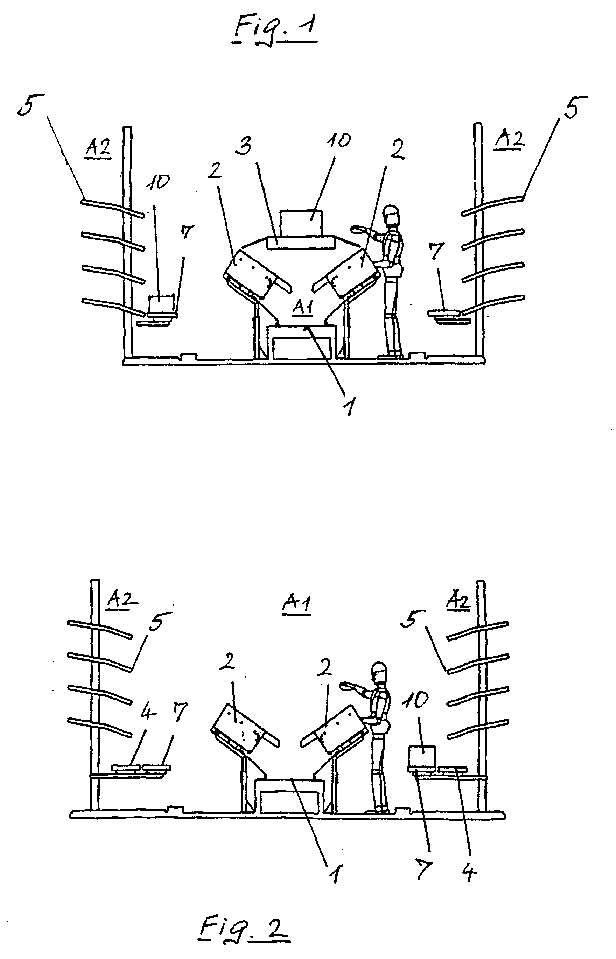

Gemäß Figur 1 umfaßt in einer ersten Ausführungsvariante ein gemischtes Kommissioniersystem zum Kommissionieren von zentralbandtauglichen Artikeln A1 eine Zentralbandkommissioniervorrichtung mit einem Zentralband 1 in einer direkten Zuordnung bzw. Nachbarschaft zu einem Kommissioniersystem zum Kommissionieren von nicht zentralbandtauglichen Artikeln A2 mit einem Doppelregal bestehend aus zwei voneinander beanstandeten parallelen Regalen 5, welche eine Regalgasse bilden.

In der Regalgasse zwischen den beiden Regalen 5 befindet sich mittig parallel das Zentralband 1 der Zentralbandkommissioniervorrichtung, wobei ferner über dem Zentralband 1 rechts und links geringfügig seitlich versetzt zwei Reihen von Aufgabeschalen 2 vorgesehen sind. Zentral über dem Zentralband 1 befindet sich eine Abzugsstrecke 3, welche an ihrem (nicht veranschaulichten) Ausgang bzw. Längsende zum entsprechenden Längsende des Zentralbandes 1 führt.

In den Bereich der untersten Ebenen der Regale 5 ist regalgangseitig jeweils eine horizontale Förderstrecke 7 in Form einer freien Rollenbahn integriert, auf der sich Behälter 10 für ein manuelles Kommissionieren von nicht zentralbandtauglichen Artikeln A2 befinden. Die freie Rollenbahn ist als sogenannte geradlinige Schiebestrecke ausgeführt, welche parallel zum benachbarten, jedoch beanstandeten Zentralband 1 verläuft.

Die Anordnung ist mithin so getroffen, daß innerhalb der Regalgasse sowohl rechts als auch links vom Zentralband 1 ein Kommissioniergang für zumindest jeweils einen Kommissionierer gebildet wird, dem sowohl die zugewandte Förderstrecke 7 bzw. deren Behälter 10 als auch die zugewandte Aufgabeschale 2, und auch die zentrale Abzugsstrecke 3 manuell leicht zugänglich ist.

Die vorgenannte erste Ausführungsvariante besteht mithin aus einer Zentralbandkommissioniervorrichtung, z.B. der eingangs erwähnten Art, mit einem Zentralband 1, Aufgabeschalen 2 und einer zusätzlichen Abzugsstrecke 3 über dem Zentralband 1, auf der die Behälter 10 abtransportiert werden, die manuell gepickt wurden. Weiterhin umfaßt die erste Ausführungsvariante zwei manuelle Schiebestrecken in Form von zwei Förderstrecken 7 in den Regalen 5.

Der Kommissioniervorgang ist wie folgt.

Vorab werden leere Behälter 10 oder Kartons meist in der Station, in der sie bearbeitet werden, auf die freie Rollenbahn bzw. auf die zugehörige Förderstrecke 7 aufgesetzt. Dann werden die nicht zentralbandfähigen Artikel A2 meist manuell in die Behälter 10 oder in Kartons kommissioniert, die auf den Förderstrecken 7 im Regal 5 weitergeschoben werden. Die befüllten Behälter/Kartons werden dann vom zugehörigen Kommissionierer auf die über dem Zentralband 1 liegende zentrale Abzugsstrecke 3 übergeschoben bzw. hinübergehoben und gelangen von dort zur Übergabestelle des Längsendes des darunterliegenden Zentralbandes 1.

Vorzugsweise zeitgleich werden die zentralbandfähigen Artikel A1 zunächst in den Aufgabeschalen 2 oder in Automatenkanälen, wie z.B. einem Schnelldrehautomaten, kommissioniert bzw. nachgefüllt. Von dort werden sie automatisch auf eine definierte Stelle des Zentralbandes 1 ausgeworfen und am Ende des Zentralbandes 1 in die vorgenannten vorgefüllten Behälter 10 bzw. Kartons gefüllt, in die schon die nicht zentralbandfähigen Artikel A2 kommissionieren worden sind. Ist ein Behälter/Karton voll befüllt oder der Kommissionierauftrag abgeschlossen, gelangen die Behälter/Kartons nach einer Umreifung, Etikettierung, etc. in Richtung Versandstation.

Es können somit zu jeder Zeit und an jedem Ort im gemischten Kommissioniersystem zentralbandfähige Artikel A1 und nicht zentralbandfähige Artikel A2 kommissioniert werden.

Gegebenenfalls kann die Abzugsstrecke 3 unter Umgehung der Übergabestelle bzw. des Ausgangs des Zentralbandes 1 direkt zur Versandstation führen. Dann gelangen die nicht zentralbandfähigen kommissionierten Artikel unvermischt direkt zur Versandstation. Entsprechendes gilt für die zentralbandfähigen Artikel.

Die Ausführungsvariante gemäß Figur 2 entspricht im wesentlichen der Variante nach Figur 1. Jedoch ist die zentrale Abzugsstrecke 3 über dem Zentralband 1 durch zwei unabhängige Abzugsstrecken 4 bzw. Bänder in den Regalen 5 links und rechts des Kommissionierganges ersetzt. Die Abzugsstrecken 4 befinden sich in dichter Nachbarschaft und auf gleicher Höhe zur zugehörigen Förderstrecke 7 und sind gleichermaßen in das zugehörige Regal 5 in der unteren Regalebene integriert. Der Weitertransport der Behälter 10 kann wiederum entweder direkt zur Versandstation oder am Ende des Systems noch zur Übergabestelle des Zentralbandes 1 erfolgen, an der die zentralbandtauglichen Artikel A1 in den Behälter 10 übergeben werden, in den schon die nicht zentralbandtauglichen Artikel A2 kommissioniert worden sind.

Die beiden Förderstrecken 7 der Regale 5 links und rechts des Zentralbandes 1 können nicht nur als einfache Schiebestrecken, sondern auch als konventionelle Kommissionierstationen mit automatischer Ausschleusung in dieselben ausgeführt sein.

Hinsichtlich der Kommissionierfunktion unterscheidet sich die zweite Ausführungsvariante von der ersten Ausführungsvariante lediglich dadurch, daß das Abheben der Behälter 10 mit den kommissionierten nicht zentralbandfähigen Artikel von den Förderstrecken 7 in den Regalen 5 und das Überschieben auf die zentrale Abzugsstrecke 3 über dem Zentralband innerhalb der Gangmitte entfällt. Hier werden die Behälter 10 von den Förderstrecken 7 direkt auf die innenliegenden Abzugsstrecken 4 in den Regalen 5 übergeschoben.

Sind die Abzugsstrecken 4 mit Ausschleusstationen versehen, ist es bei dieser Variante möglich, die Behälter/Kartons für die nicht zentralbandfähigen Artikel nur in jenen Regalbereichen auszusteuern, von welchen tatsächlich Artikel gebraucht werden. Dadurch kann wiederum das Aufsetzen der Behälter auf die Förderstrecke 7 zentral erfolgen, weil die Kommissionierung nicht durch leere Behälter, welche keine Artikel aus dem entsprechenden Regalbereich benötigen, gestört wird.

Eine Vorsortierung der Artikel für einen bestimmten Behälter zu einem bestimmten Regalbereich kann ebenfalls entfallen oder braucht nicht so streng gehandhabt zu werden, auch wenn eine solche Vorsortierung immer noch den Weg der Behälter/Kartons entlang der Regale bzw. die angefahrenen Kommissionierstationen minimiert und dadurch die Kommissionierleistung erhöht.

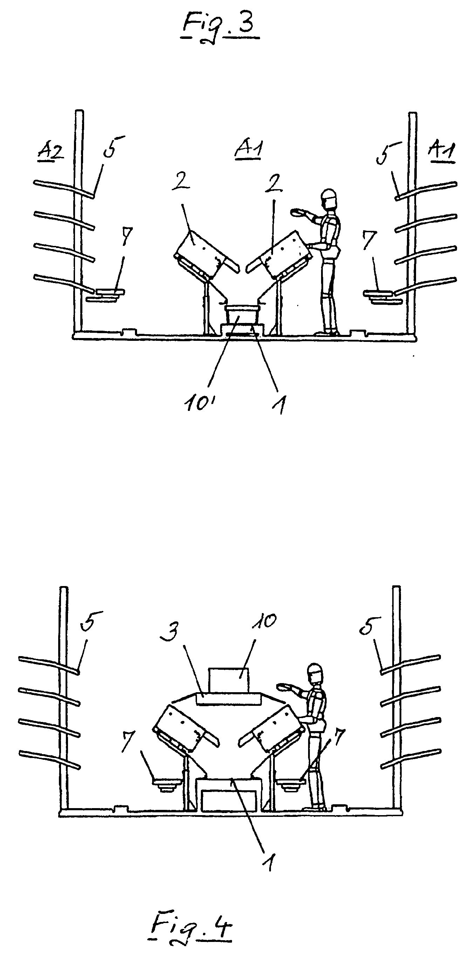

Die dritte Ausführungsvariante gemäß Figur 3 entspricht im wesentlichen der ersten Ausführungsvariante gemäß Figur 1, jedoch ohne zusätzliches Abzugsband bzw. Abzugsstrecke 3. Der Abtransport der Behälter 10 mit den nicht zentralbandfähigen Artikel A2 erfolgt auf dem Zentralband 1 der Zentralbandkommissioniervorrichtung. Bei dieser Variante werden die zentralbandtauglichen Artikel aus der Zentralbandkommissioniervorrichtung nicht direkt auf das Zentralband 1 geworfen und erst am Ende des Zentralbandes in den Behälter übergeben, sondern direkt in Behälter 10' übergeben, die auf dem einzigen Zentralband 1 durch das Lager gefördert werden. Behälter 10 mit nicht zentralbandfähigen Artikeln A2 laufen gemischt mit Behältern 10' mit zentralbandfähigen Artikeln A1.

Hinsichtlich der Kommissionierfunktion unterscheidet sich die Ausführungsvariante gemäß Figur 3 von derjenigen gemäß Figur 1 also dadurch, daß die Behälter/Kartons mit den nicht zentralbandfähigen Artikeln A2, sobald sie vollständig kommissioniert sind, nicht auf die hier nicht vorhandene zentrale Abzugsstrecke 3, sondern direkt auf das Zentralband 1 aufgesetzt werden, auf dem auch die Behälter mit den zentralbandfähigen Artikeln A1 laufen.

Die vierte Ausführungsvariante gemäß Figur 4 unterscheidet sich von der ersten Ausführungsvariante gemäß Figur 1 dadurch, daß die zusätzlichen Schiebestrecken bzw. Förderstrecken 7 nicht in den Regalen 5 integriert sind, sondern bereits neben dem Zentralband 1 verlaufen. Dadurch können sich Platzeinsparungen ergeben. Die nicht zentralbandfähigen Artikel A2 werden in die Behälter/Kartons direkt rechts oder links vom Zentralband 1 kommissioniert. Nach einer Kommissionierung werden die Behälter 10 auf die zentrale Abzugsstrecke 3 über dem Zentralband 1 übergeschoben bzw. gehoben.

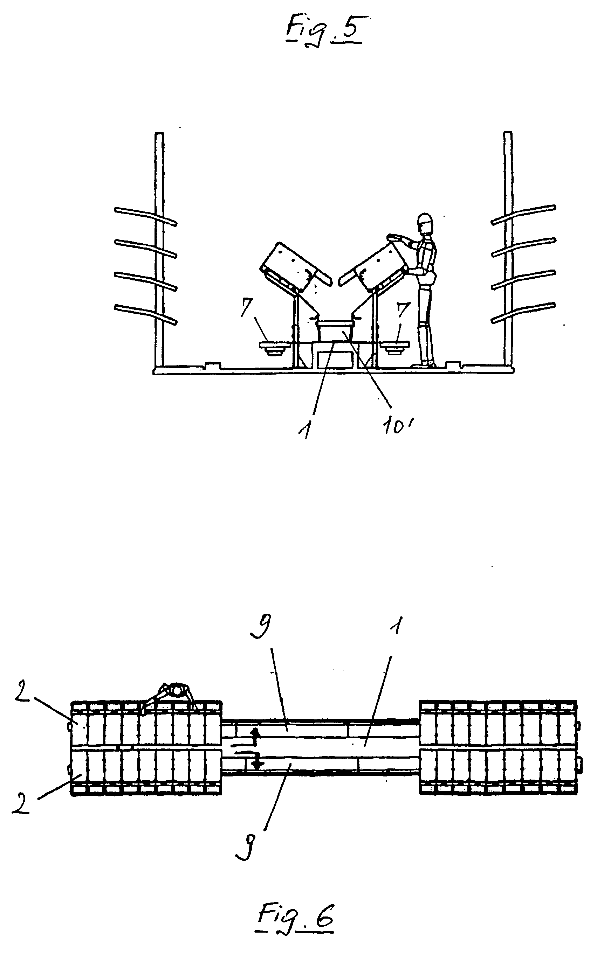

Die fünfte Ausführungsvariante gemäß Figur 5 entspricht im wesentlichen derjenigen nach Figur 4. Die Behälter mit den nicht zentralbandfähigen Artikeln A2 werden allerdings nicht auf die zentrale Abzugsstrecke 3 über dem Zentralband 1 übergeschoben, sondern direkt auf das Zentralband 1 ähnlich Figur 3.

Die sechste Ausführungsvariante entspricht im wesentlichen der Ausführungsvariante gemäß Figur 5, sieht jedoch zusätzlich am einzigen Zentralband 1 Ausschleusstationen 9 vor, wie dies insbesondere in der Draufsicht der Figur 6 ersichtlich ist, so daß die Schiebestrecken zu konventionellen manuellen Kommissionierstationen werden. Dadurch müssen die Behälter/Kartons nicht in den entsprechenden Kommissionierstationen erst auf das System aufgesetzt werden, sondern können an einem zentralen Aufgabepunkt für das gesamte System oder für mehrere Kommissioniersysteme aufgegeben und an den entsprechenden Kommissionierstationen wieder ausgeschleust werden. Das Behälteraufkommen in den Stationen vermindert sich dadurch ebenso wie das Behälterhandling. Die Kommissionierleistung ist groß.

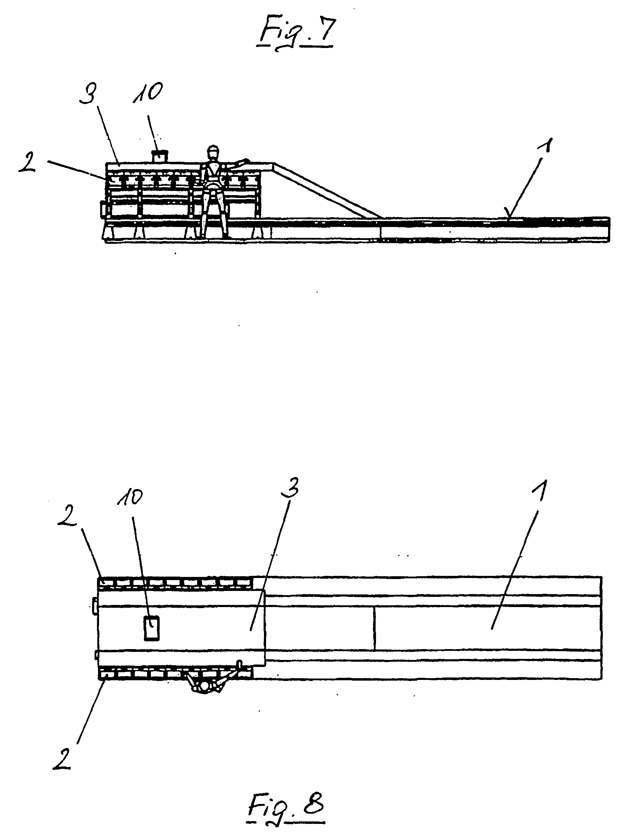

Die siebte Ausführungsvariante gemäß den Figuren 7 und 8 besitzt ein Handling wie grundsätzlich in den Varianten 1 bis 6 beschrieben, jedoch für zentralbandtaugliche Artikel A1 und nicht zentralbandtaugliche Artikel A2 getrennt, aber dennoch innerhalb desselben Kommissionierganges bzw. Systems. In einem solchen System sind die nicht zentralbandfähigen Artikel A2 zweckmäßigerweise in Förderrichtung gesehen am Anfang des Kommissionierganges konzentriert, weil dann im laufenden Fluß noch zentralbandfähige Artikel A1 über einen Kommissionierautomaten kommissioniert werden können, ohne daß dieser eine weitere Strecke laufen muß.

Alternativ ist bei dieser Ausführungsvariante eine Anordnung der nicht zentralbandfähigen Artikel A2 am Ende eines Kommissionierganges möglich. Dann werden die zentralbandfähigen Artikel A1 zuletzt vornehmlich manuell mit nicht zentralbandfähigen Artikeln A2 ergänzt. Dies hat den Vorteil, daß die Artikel der Zentralbandkommissioniervorrichtung zunächst in den leeren Behälter fallen, und dadurch mit hoher Wahrscheinlichkeit nicht aus dem Behälter/Karton herausspringen.

Bei der siebten Ausführungsvariante werden also die zentralbandtauglichen von den nicht zentralbandtauglichen Artikeln innerhalb des Kommissionierganges getrennt. Dabei kann das Zentralbandsystem wie auch das konventionelle Kommissioniersystem mit Schiebestrecken oder Kommissionierstationen bzw. Ausschleusstationen kürzer ausfallen, und zwar in dem Bereich, in dem die jeweiligen zentralbandfähigen oder nicht zentralbandfähigen Artikel lagern. Somit können bei immer noch kurzen Durchlaufzeiten und wahlweise gemischten Behältern Kosten gespart werden.

## Patentansprüche

1. Kommissioniersystem zum Kommissionieren von zentralbandtauglichen Artikeln (A1) in einer Zentralbandkommissioniervorrichtung und nicht zentralbandtauglichen Artikeln (A2) manuell aus einem Artikellager bzw. Regal (5), bei welchem zentralbandtaugliche Artikel (A1) in der Zentralbandkommissioniervorrichtung über einem Zentralband (1) kommissioniert werden und automatisch gezielt direkt auf das angetriebene Zentralband (1) und von dort am Ende des Zentralbandes in einen stationären Behälter oder gleich in einen auf dem angetriebenen Zentralband angeordneten Behälter (10') fallen,
**dadurch gekennzeichnet, daß**
das Zentralband (1) in einer Regalgasse eines Doppelregals vorgesehen ist, welches zwei parallele voneinander beabstandete Regale (5) besitzt, denen jeweils eine vorzugsweise bodennahe Förderstrecke (7) zugeordnet ist, und die beiden Förderstrecken (7) vorzugsweise in Form freier Rollenbahnen im Kommissionierbereich des Zentralbandes (1) parallel zum Zentralband verlaufen und Behälter (10) auf den Förderstrecken (7) für eine manuelle Befüllung mit nicht zentralbandtauglichen Artikeln (A2) angeordnet sind, wobei die mit nicht zentralbandtauglichen Artikeln (A2) befüllten Behälter (10) entweder direkt einer Versandstation oder für eine weitere Befüllung mit zentralbandtauglichen Artikeln (A1) direkt dem angetriebenen Zentralband (1) oder einer Abzugsstrecke (3, 4) überführbar sind, welche die mit nicht zentralbandtauglichen Artikeln (A2) befüllten Behälter (10) an das Ende des Zentralbandes (1) für eine weitere Befüllung mit zentralbandtauglichen Artikeln (A1) fördert.

2. Kommissioniersystem nach Anspruch 1,
**dadurch gekennzeichnet, daß**
die Förderstrecke (7) im Regal (5) integriert ausgebildet ist und zumindest teilweise baulicher Bestandteil des Regals ist.

3. Kommissioniersystem nach Anspruch 1,
**dadurch gekennzeichnet, daß**
die Förderstrecke (7) im Bereich des Zentralbandes (1) angeordnet und zumindest teilweise baulicher Bestandteil der Zentralbandkommissioniervorrichtung ist.

4. Kommissioniersystem nach einem der Ansprüche 1 bis 3,
**dadurch gekennzeichnet, daß**
die Abzugsstrecke (3) über dem Zentralband (1) angeordnet ist.

5. Kommissioniersystem nach Anspruch 1 oder 2,
**dadurch gekennzeichnet, daß**
die Abzugsstrecke (4) unmittelbar neben der Förderstrecke (7) in einer Parallelanordnung vorzugsweise in gleicher Höhe vorgesehen ist.

6. Kommissioniersystem nach einem der Ansprüche 1 bis 5,
**dadurch gekennzeichnet, daß**
die Förderstrecke (7), die Abzugsstrecke (3, 4) und/oder das Zentralband (1) mit zumindest einer Ausschleusstation (9) versehen ist.

## Claims

1. A commissioning system for commissioning articles (A1) which are suitable for a central belt in a central belt commissioning device and articles (A2) which are not suitable for a central belt manually from a article warehouse or shelf (5), in which said articles (A1) which are suitable for a central belt are commissioned in the central belt commissioning device above a central belt (1) and fall automatically directly onto the driven central belt (1) in a targeted manner and from there they fall into a stationary container or immediately into a container (10) arranged on the driven central belt at the end of the central belt,
**characterized in that**
the central belt (1) is provided in a bay aisle of a double shelf, which has two parallel shelves (5), which are arranged at spaced locations from one another and with which a conveying track (7) each, which is preferably located close to the floor, is associated, and both of said conveying tracks (7) preferably in the form of a free roller path, are provided in the commissioning area of the central belt (1) in parallel to the central belt, and said containers (10) are arranged on said conveying tracks (7) for manual filling with said articles (A2) which are not suitable for a central belt, wherein the containers (10) filled with said articles (A2) which are not suitable for a central belt can be transferred either directly to a dispatching station or, for further filling with said articles (A1) which are suitable for a central belt, directly to the driven central belt (1) or to a removing track (3, 4), which conveys the containers (10) filled with said articles (A2) which are not suitable for a central belt to the end of the central belt (1) for further filling with said articles (A1) which are suitable for a central belt.

2. A commissioning system in accordance with claim 1,
**characterized in that**
the conveying track (7) is designed as a conveying track integrated in the shelf (5) and is a structural component of the shelf at least partially.

3. A commissioning system in accordance with claim 1,
**characterized in that**
the conveying track (6) is arranged in the area of the central belt (1) and is a structural component of the central belt commissioning device at least partially.

4. A commissioning system in accordance with one of the claims 1 through 3,
**characterized in that**
the removing track (3) is arranged above the central belt (1).

5. A commissioning system in accordance with claim 1 or 2,
**characterized in that**
the removing track (4) is provided directly next to the conveying track (7) in a parallel arrangement, preferably at the same level.

6. A commissioning system in accordance with one of the claims 1 through 5,
**characterized in that**
the conveying track (7), the removing track (3, 4) and/or the central belt (1) is/are provided with at least one discharge station (9).

## Revendications

1. Système d'approvisionnement pour l'approvisionnement d'articles (A1), appropriés à une bande centrale, dans un dispositif d'approvisionnement à bande centrale et pour l'approvisionnement d'articles (A2), prélevés manuellement d'un entrepôt ou étagère d'articles (5), qui ne sont pas appropriés à une bande centrale dans lequel système des articles, appropriés à une bande centrale, sont approvisionnés dans un dispositif d'approvisionnement à bande centrale via une bande centrale (1) et tombent automatiquement de façon ciblée directement sur la bande centrale entraînée (1) et à partir de cette bande, à la fin de la bande centrale, dans un récipient stationnaire ou tombent tout de suite dans un récipient (10') stationnaire disposé sur la bande centrale entraînée,
**caractérisé en ce que**
la bande centrale (1) est prévue dans un couloir d'étagères d'une double étagère, laquelle étagère comporte deux étagères (5) parallèles éloignées l'une de l'autre, auxquelles étagères est associé à chaque fois un trajet de transport (7) dé préférence proche du sol, et les deux trajets de transport (7) s'étendent de façon parallèle à la bande centrale, de préférence sous formes de pistes à rouleaux libres, dans la zone d'approvisionnement de la bande et des récipients (10) sont disposés sur les trajets de transport (7) pour un remplissage manuelle avec des articles (A2) qui ne sont pas appropriés à la bande centrale, où les récipients (10), remplis avec des articles (A2) qui ne sont pas appropriés à la bande centrale, peuvent être transférés soit directement à une station d'envoi ou pour un remplissage ultérieur avec des articles qui ne sont pas appropriés à une bande centrale directement à une bande centrale (1) entraînée ou un trajet (3, 4) de retrait, lequel trajet transporte les récipients (10) remplis d'articles (A2) qui sont appropriés à la bande centrale vers la fin de la bande centrale (1) pour un remplissage ultérieur avec des articles (A1) qui sont appropriés à la bande centrale.

2. Système d'approvisionnement selon la revendication 1,
**caractérisé en ce que**
le trajet de transport (7) est réalisé de façon intégrée dans l'étagère et fait au moins partiellement parti de composants de l'étagère.

3. Système d'approvisionnement selon la revendication 1,
**caractérisé en ce que**
le trajet de transport (7) est disposé dans la zone de la bande centrale (1) et fait au moins partiellement parti de composants du dispositif d'approvisionnement de la bande centrale.

4. Système d'approvisionnement selon une des revendications 1 à 3,
**caractérisé en ce que**
le trajet de retrait (3) est disposé au dessus de la bande centrale (1).

5. Système d'approvisionnement selon une des revendications 1 ou 2,
**caractérisé en ce que**
le trajet de retrait (4) est prévu directement à côté du trajet de transport (7) de préférence dans une disposition en parallèle de préférence à même hauteur.

6. Système d'approvisionnement selon une des revendications 1 à 5,
**caractérisé en ce que**
le trajet de transport (7), trajet le trajet de retrait (3, 4) et/ou la bande centrale (1) sont pourvus au moins d'une station d'expulsion (9).
